# EUROPEAN PATENT SPECIFICATION

(11) **EP 1 232 089 B1**
(45) Date of publication and mention of the grant of the patent: **23.07.2003**
(21) Application number: 00968241.0
(22) Date of filing: 19.10.2000
(51) Int. Cl.: B62M 1/04

(54) **FOOT-OPERATED DRIVE OF A BICYCLE**
PEDAL-KETTENANTRIEB FÜR FAHRRAD
TRANSMISSION A PEDALES POUR BICYCLETTE

(30) Priority: 18.11.1999 PL 33667799; 25.05.2000 PL 34034700
(43) Date of publication of application: 21.08.2002
(73) Proprietor: Rabiega, Ryszard, 22 400 Zamosc (PL)
(72) Inventor: Rabiega, Ryszard, 22 400 Zamosc (PL)
(74) Representative: König, Beate, Dipl.-Phys. Dr.
(86) International application number: PL0000074
(87) International publication number: WO01036258

(56) References cited:
- EP-A- 0 311 782
- FR-A- 2 265 018
- GB-A- 2 104 462
- US-A- 3 984 129

## Description

The subject of the present invention is a foot-operated drive of a bicycle, particularly of the back wheel fitted with slow-speed toothed wheels.

So far, in known and used bicycles, chain transmissions, often equipped with mechanisms of gear at one or two of the toothed wheels are employed for the drive. The front toothed wheel is connected with pedals through a crank, that pedals are driven rotationally by feet of a user.

The disadvantage of such a solution is that merely a half of the rotation of the gear results in the driving of the bicycle, while the rest of the rotation is idle, i.e. no effective work is done. In such a known bicycle one obtains the maximum torque in the horizontal position of the crank of the toothed gear. In another position of the crank only a component of the force of the pressure acts on the pedal. Therefore the average torque equal to the half of the maximum torque is obtained during the rotation of the gear.

It is known from the document GB 2 104 462 a foot-operated drive of a bicycle, particularly of the back wheel fitted with slow-speed toothed wheels ended with pedals. The levers are fitted with a crossbars connected stiffly with the levers fixed rotationally on an axle to the bottom part of the frame. To the ends of the crossbars, ends of the bicycle chains are fixed rotationally.

Said solution is too complicated and low efficiency of the drive.

It is also known from the description in Polish patent application PL 144 423 a drive of vehicles, particularly bicycles, placed on the frame and connected with the back wheel, consisted with foot-operated pressing elements, connected with racks propelling toothed wheels situated on the common axle with chain central wheel connected with the back wheel of the vehicle. The ends of the racks are in the shape of pistons and are placed slidely in a leakproof vessel, preferably in a shape of a U - pipe, filled up with a liquid, and the central wheel placed in the frame by rolling elements has on its both sides sleeves with bearings inside placed on an axle, whereas on the outer cylindrical surfaces of the sleeves are placed gears consisting of rings of gear elements and hubs, and the racks are ended with flat pedals.

It is also known from the description in Polish patent application PL 171 047 a pedal mechanism, particularly for man-powered vehicles, comprising rocking levers with pedals connected with a crank mechanism by pushers. Rocking levers with pedals placed self-aligningly on the common axle and connected with the crank mechanism by the pushers are placed in such a way, that the straight line connecting the two extreme points of the position of the rocking levers does not intersects the axis of rotation of the crank mechanism.

It is also known from the description in Polish patent application P. 332 976 a drive of a wheel vehicle, dedicated particularly for small diameter wheel vehicles such as scooters or skate-boards. There is a pedal with a strand placed self-aligningly in the rear part of the floor. The strand belts a directional oval and unidirectional gear placed on the wheel.

The disadvantage of these known solutions is low efficiency of the drive.

Moreover, it is known from the description in Polish patent application P. 332 269 a foot-operated drive of a bicycle for the back wheel, particularly with a toothed disc, comprising on both sides of the bicycle, symmetrically placed double-armed levers fixed on an axle on the bottom part of the frame of the bicycle, and circular sectors of internal toothed wheel are fixed to the shorter arms of the levers, co-operating with toothed discs with idle return move, placed on the axle of the back wheel of the bicycle. From the bottom skew part of the frame of the bicycle the guides of the longer part of the levers with bottom stoppers jut out down and longer arms of the levers are connected with the bottom part of the frame by tension springs, and pedals are fixed on the longer ends of the levers.

The object of the invention is to provide a foot-operated drive of a bicycle, of the back wheel of the bicycle being fitted with slow-speed toothed wheels, said drive comprising on both sides of the bicycle symmetrically placed levers rotationally mounted on an axle to the bottom part of the frame, each lever ending with a pedal and being stiffly fitted with a crossbar having upper and bottom parts extending away from said lever, characterized in that each side of the bicycle being provided with a bicycle chain having its upper and bottom ends rotationally connected to the upper and bottom parts of the crossbars and driving a slow-speed toothed wheel of the back wheel of the bicycle, and with a tension spring for returning the pedal to the upper position.

In the preferred embodiment the tension springs are placed in a cylinder and abut with one end on the bottom of the cylinder, and the other free ends of the tension springs are connected by fasteners with bottom ends of the bicycle chains causing squeezing the tension springs.

The invention exchanges advantageously the rotational motion of the so far bicycle drives into the reciprocating motion. Such a solution essentially improves the efficiency of the usage of human muscles. The drive according to the invention enables independent motion of the both driving levers, protects bottom parts of the clothing of a cyclist from getting dirty and screwing in between the gear and the oiled chain. Such a drive may be used in different kinds of man-operated vehicles, because it enables the work with almost constant driving torque with an error of 4%. The gear change applied makes it easier to ride in different area. Moreover, thanks to possible regulation of the pedal travel it is easier to overcome land obstacles and thanks to possibility of using only one of the two pedals one can pedal even in a sharp turn. Also the relaxed position of riding becomes more comfortable because the two legs of a cyclist may be kept straight simultaneously.

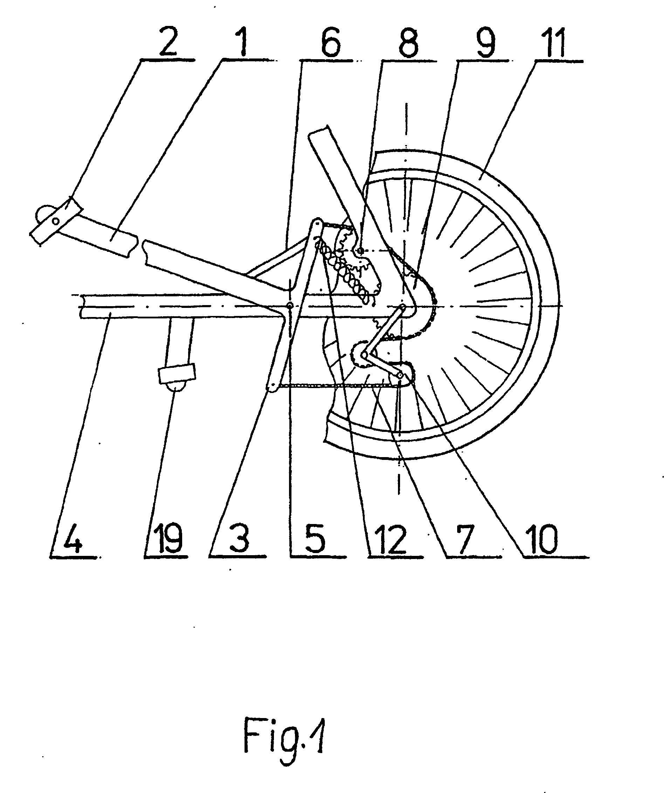

The embodiments of the invention are presented in the drawings, where
fig. 1 shows the drive of a bicycle with the gear change according to the invention in the end view,

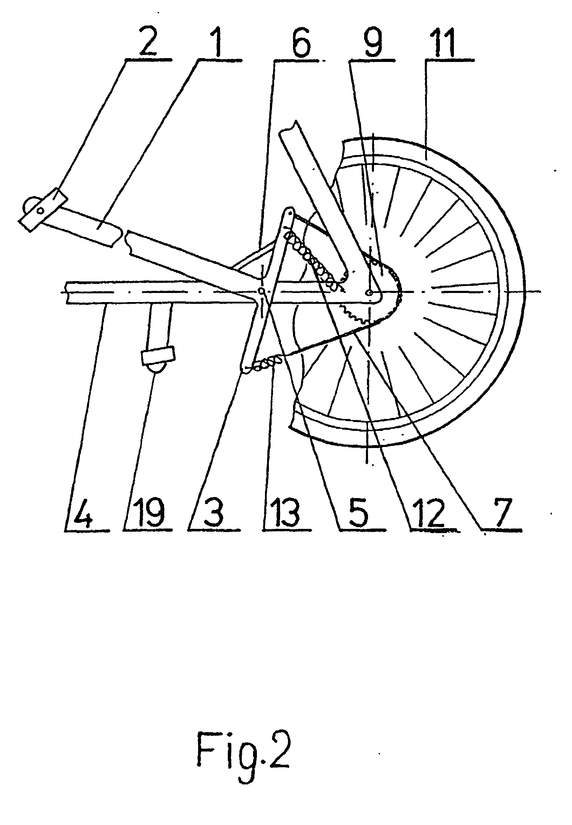

fig. 2 shows the second one embodiment of the drive of a bicycle in the end view,

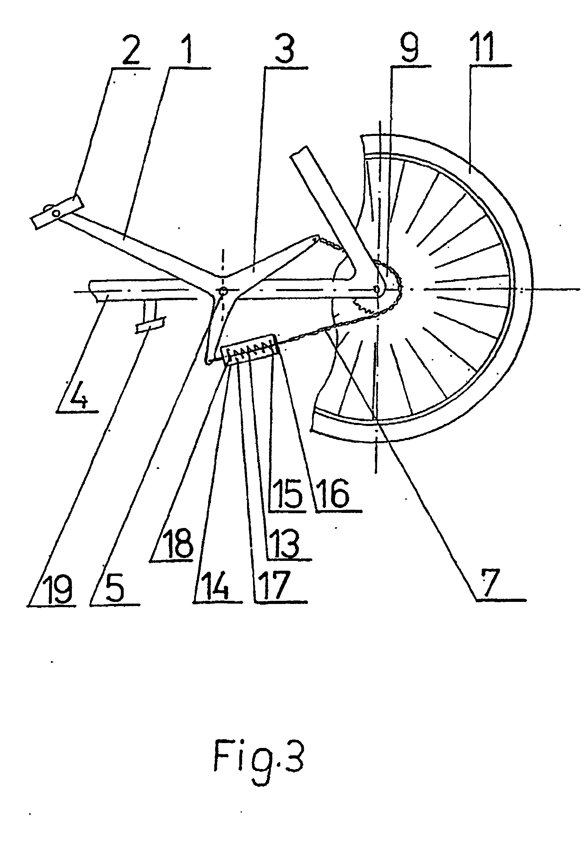

fig. 3 shows the third one embodiment of the drive of a bicycle in the end view.

The foot-operated drive of a bicycle, particularly of the back wheel fitted with slow-speed toothed wheels, comprises on both sides of the bicycle, symmetrically placed levers 1 ended with pedals 2, the levers fitted with cross-bars 3 connected stiffly by strengtheners 6 with the levers 1 fixed rotationally on an axle 5 to the bottom part of the frame 4. To the ends of the cross-bars 3, ends of the bicycle chains 7 are fixed rotationally belting guiding-straining rollers 8 fixed rotationally to the back skew part of the frame 4, driving slow-speed toothed wheel 9 of the back wheel 11 of the bicycle and gear change 10, whereas upper parts of the cross-bars 3 are connected with the bottom back parts of the frame 4 by tension springs 12.
In this solution the compensation of the chain length is obtained thanks to the gear change and the spring guarantees the return of the pedal into the upper position.

In the preferred embodiment, the bottom parts of the crossbars 3 are connected with the bottom ends of the bicycle chains 7 through the tension springs 13.

In this solution compensation of the chain length is obtained through the tension spring.

In another embodiment tension springs 13 are placed in a cylinder 14 and abut with one end 15 on the bottom 16 of the cylinder 14, and the other free ends 17 of the tension springs 13 are connected by fasteners 18 with bottom ends of the bicycle chains 7, causing squeezing the tension springs 13.

In the preferred embodiment according to the invention, the bottom part of the frame 4 is fitted with a stopper 19 setting the bottom position of the lever 1.

In the solution of the drive according to the invention not only the driving torque close to the maximum torque is obtained but also the torque may be essentially increased using a long driving lever thus increasing the dynamics of the drive. The inventor as an amateur cyclist obtained the speed of 40 km/h on a long distance without much effort.

## Claims

1. A foot-operated drive of a bicycle, the back wheel (11) of the bicycle being fitted with slow-speed toothed wheels (9), said drive comprising on both sides of the bicycle symmetrically placed levers (I) rotationally mounted on an axle (5) to the bottom part of the frame (4), each lover ending with a pedal and being stiffly fitted with a crossbar (3) having upper and bottom parts extending away from said lever, **characterized in that** each side of the bicycle is provided with a bicycle chain (7) having its upper and bottom ends rotationally connected to the upper and bottom parts of the crossbar (3) and driving a slow-speed toothed wheel (9) of the back wheel (11) of the bicycle, and with a tension spring (12, 13) for returning the pedal to the upper position.

2. The drive according to the claim I **characterized in that** the tension springs (13) are placed in a cylinder (14) and abut with one end (15) on the bottom (16) of the cylinder (14), and the other free ends (17) of the tension springs (13) are connected by fasteners (18) with bottom ends of the bicycle chains (7) causing squeezing the tension springs (13).

## Patentansprüche

1. Fußantrieb für ein Fahrrad, wobei am Hinterrad (11) des Fahrrades langsam laufende Zahnräder (9) angebracht sind, wobei der Antrieb auf beiden Seiten des Fahrrades symmetrisch angeordnete Hebel (1) umfaßt, die drehbar an einer Achse (5) am Unterteil des Rahmens (4) angebracht sind, wobei jeder Hebel mit einem Pedal endet und starr mit einem oberen Rahmenrohr (3) befestigt ist, das sich von dem Hebel fort erstreckende obere und untere Teile aufweist, **dadurch gekennzeichnet, daß** jede Seite des Fahrrades mit einer Fahrradkette (7) versehen ist, deren obere und untere Enden drehbar mit den oberen und unteren Teilen des oberen Rahmenrohrs (3) verbunden sind und die ein langsam laufendes Zahnrad (9) des Hinterrads (11) des Fahrrades antreiben, und mit einer Zugfeder (12, 13) zum Zurückführen des Pedals zur oberen Position.

2. Antrieb nach Anspruch 1, **dadurch gekennzeichnet, daß** die Zugfedern (13) in einem Zylinder (14) angeordnet sind und mit einem Ende (15) am Boden (16) des Zylinders (14) anstoßen und die anderen freien Enden (17) der Zugfedern (13) durch Befestigungselemente (18) mit unteren Enden der Fahrradketten (7) verbunden sind, was ein Pressen der Zugfedern (13) herbeiführt.

## Revendications

1. Transmission à pédales pour bicyclette, la roue arrière (11) de la bicyclette étant munie de pignons dentés (9) de petite vitesse, ladite transmission comprenant sur les deux côtés de la bicyclette des leviers (1) placés symétriquement, montés de manière rotative sur un essieu (5) dans le bas du cadre (4), chaque levier se terminant par une pédale et faisant corps avec une barre transversale (3) dont les parties supérieure et inférieure s'étendent depuis ledit levier, **caractérisée en ce que** chaque côté de la bicyclette est muni d'une chaîne (7) de bicyclette dont les extrémités supérieure et inférieure sont reliées de manière rotative aux parties supérieure et inférieure de la barre transversale (3) et entraînent un pignon denté (9) de petite vitesse de la roue arrière (11) de la bicyclette, et d'un ressort de tension (12, 13) pour faire revenir la pédale dans la position haute.

2. Transmission selon la revendication 1, **caractérisée en ce que** les ressorts de tension (13) sont placés dans un cylindre (14) et butent par une première extrémité (15) au fond (16) du cylindre (14), et les autres extrémités libres (17) des ressorts de tension (13) sont reliées par des moyens de fixation (18) aux extrémités inférieures des chaînes (7) de bicyclette en provoquant la compression des ressorts de tension (13).
